Europäisches Patentamt

**European Patent Office**

**Office européen des brevets**

(19)

(11) Numéro de publication: **0 165 112**

**A1**

(12) **DEMANDE DE BREVET EUROPEEN**

(21) Numéro de dépôt: **85400880.2**

(22) Date de dépôt: **06.05.85**

(51) Int. Cl.⁴: **A 01 G 27/00**

(30) Priorité: **18.05.84 FR 8407923**
**22.04.85 FR 8506197**

(43) Date de publication de la demande:
**18.12.85 Bulletin 85/51**

(84) Etats contractants désignés:
**AT BE CH DE GB IT LI LU NL SE**

(71) Demandeur: **Baron, Gérard**
**7 rue Auguste Bailly**
**F-92140 Courbevoie(FR)**

(72) Inventeur: **Baron, Gérard**
**7 rue Auguste Bailly**
**F-92140 Courbevoie(FR)**

(74) Mandataire: **Hautier, Jean-Louis**
**Cabinet Hautier Office Méditerranéen de Brevets**
**d'Invention 24 rue Masséna**
**F-06000 Nice(FR)**

(54) **Hydrorétenteurs emballés dans des sacs ou sachets individuels, perméables, de stockage, de manutention, d'utilisation et procédé d'utilisation.**

(57) Ils song enfermés dans des sacs ou sachets (1) perméables qui leur permettent de gonfler en absorbant l'eau par bassinage et de la restituer, après avoir été disposés au fond du pot (9) au fur et à mesure des besoins de la plante, et ce avec une manipulation, par l'utilisateur, propre et rapide. L'emballage desdits hydrorétenteurs dans les sacs ou sachets (1), où ils sond libres, permet leur gonflage maximum d'où une efficacité maximum de leur capacité à retenir l'eau. La structure du sac ou sachet (1) est telle qu'elle est perméable à l'eau mais imperméable aux cristaux de produits (2); de plus, la structure du sac (1) peut permettre aux racines d'entrer dans le sac (1) et d'arriver en contact direct avec le produit hydrorénteur (2).

Hydrorétenteurs notamment pour plantes d'appartement.

FIG-2

L'invention a pour objet des hydrorétenteurs vendus et utilisés dans des sacs ou sachets.

Depuis qu'il a été démontré que l'incorporation de produits hydrorétenteurs, tels que des polyacrylamides, dans les substrats de culture en container, accélère le développement racinaire tout en réduisant la fréquence d'irrigation, lesdits produits hydrorétenteurs sont de plus en plus utilisés.

En usage domestique, l'utilisation des hydrorétenteurs est fastidieuse.

1°) Mise en pot

Ainsi, à la mise en pot, en jardinière ou en bac (avec ou sans réserve d'eau) de jeunes plantes, il faut mélanger lesdits hydrorétenteurs au terreau d'empotage selon les doses habituelles.

Le terreau mélangé aux hydrorétenteurs est remis en place dans le pot, la jardinière ou le bac et ce, jusqu'à trois centimètres du bord puisque les hydrorétenteurs vont gonfler à l'arrosage.

2°) Pour les pots ou bacs déjà plantés

Il est conseillé de faire des trous sur le pourtour de la motte, le long de la paroi du pot, les hydrorétenteurs sont répartis ensuite dans les trous.

3°) Les rempotages

Pour tous les rempotages, il est conseillé de bien mélanger le terreau et les hydrorétenteurs, puis de retasser ledit terreau après arrosage.

Dans les trois cas de figure, la mise en place des hydrorétenteurs n'est pas aisée. Il faut de la place, ne pas avoir peur de salir le sol etc. Ce procédé ne peut être utilisé notamment dans des appartements ou par des personnes pressées.

La présente demande tend également à améliorer les caractéristiques techniques des hydrorétenteurs, des sacs et le procédé d'utilisation de ces produits en sachets.

L'invention tend à résoudre tous ces problèmes.

Les hydrorétenteurs sont enfermés dans des sacs perméables individuels à l'eau et aux racines et imperméables aux cristaux desdits hydrorétenteurs. Ces sacs leur permettent de gonfler après un bassinage et une fois mis en place au fond du pot, de restituer leur eau au fur et à mesure des besoins de la plante. La manipulation des hydrorétenteurs, qui sont toujours dans des sacs ou sachets, est donc aisée, simple, propre et rapide.

- 2 -

0165112

De plus, l'emballage desdits hydrorétenteurs dans des sacs où ils sont libres permet leur gonflage maximum, ce qui n'est pas le cas avec les hydrorétenteurs utilisés selon l'état de la technique. Ainsi, les hydrorétenteurs répartis dans des trous effectués dans une motte de terreau ne peuvent pas atteindre leur gonflage maximum car ils sont gênés dans leur croissance. Les produits hydrorétenteurs utilisés en vrac selon l'état de la technique, par exemple, dans des carottes circulaires, ne peuvent augmenter leur volume que de cinq à quinze fois.

Les hydrorétenteurs ne sont pas utilisés, selon le procédé actuel, avec le maximum d'efficacité, puisque tout leur gonflage potentiel n'est pas exploité.

Selon l'invention, les hydrorétenteurs sont emballés dans des sacs ou sachets individuels perméables à l'eau et aux racines et imperméables aux cristaux desdits produits hydorétenteurs. Le sac est d'un volume suffisant pour pouvoir contenir les hydrorétenteurs gonflés d'eau au maximum.

Lesdits sacs ou sachets contiennent une partie de produits hydrorétenteurs, le reste du sac est vide de manière à permettre aux produits hydrorétenteurs de gonfler jusqu'au maximum de sa capacité (cent fois son volume initial). Le sac ou sachet est perméable à l'eau de manière à ce que le produit hydrorétenteur puisse s'en imbiber et gonfler et qu'il puisse également restituer l'eau en fonction des besoins de la plante.

La structure du sac ou sachet est telle qu'elle est perméable à l'eau et aux racines mais imperméable aux cristaux de produits. De plus, la structure du sac peut permettre aux racines d'entrer dans le sac et d'arriver en contact direct avec le produit hydrorétenteur.

La composition du sac peut être en produit tissé ou non tissé. Les trous du sac sont tels qu'ils ne laissent pas passer les grains de cristaux de produits hydrorétenteurs.

Le sac ou sachet peut comporter un ou plusieurs compartiments.

Il peut comporter un moyen qui fait office de drain et assure le passage de l'eau et/ou de l'air dans le pot ou la jardinière.

Procédé d'utilisation des produits hydrorétenteurs en sacs ou en sachets :

- mettre le sac ou sachet en rétention dans 0,5 litre d'eau environ

- laisser gonfler pendant deux heures

- déposer le sac ou sachet ou coussin ainsi obtenu au fond du pot en prenant soin de ménager un drainage

- rempoter ensuite normalement

En ce qui concerne l'arrosage :

- procéder comme à l'habitude pendant les trois premières semaines, ce qui permet aux racines d'arriver en contact du produit.

- diminuer ensuite l'arrosage d'environ 30 %

- tous les trois ou quatre mois ou en cas d'absence prolongée, faire un bassinage pendant une heure.

Il est apparu que le taux de gonflement des hydrorétenteurs variait dans de très grandes proportions selon la qualité de l'eau. Ainsi selon la qualité de l'eau, dans certaines régions, les sacs qui étaient remplis pour un certain taux de gonflement éclataient.

L'invention tend à éviter également tous ces inconvénients.

L'invention tend à réguler le taux de gonflement des hydrorétenteurs. L'invention tend également à perfectionner la porosité du sac, la granulométrie des hydrorétenteurs. Enfin l'invention permet d'obtenir une synergie entre les hydrorétenteurs et des engrais à libération lente ou fertilisants. Selon un mode d'utilisation préféré, on utilise des formulations d'azote à libération progressive telles que les dérivés de l'urée.

Afin de mieux contrôler le taux de gonflement de l'hydrorétenteur, une fraction ionisée du fertilisant doit être libérée, cette fraction, à libération rapide, doit être de l'ordre de 1 à 10 % de l'engrais total incorporé dans le sac.

L'hydrorétenteur est plus particulièrement un polyélectrolyte hydrocolloïdal insoluble dans l'eau et absorbant de 50 à 800 fois son poids d'eau, tels les copolymères d'acide polyacrylique et de polyacrylamides.

Le sachet contenant les particules d'hydrorétenteur doit présenter une porosité permettant la pénétration des racines et évitant le passage des particules d'hydrorétenteur Cette porosité est comprise préférentiellement entre 0,1 et 1,5 mm.

La granulométrie de l'hydrorétenteur sera préférentiellement comprise entre 1,5 et 3 mm. En effet, l'utilisation de particules fines aboutit à la formation d'une masse de gel compacte, asphyxiante, et impropre au développement des racines.

A l'inverse, l'usage de particules de dimensions trop importantes ne permet pas une hydratation suffisamment rapide de l'hydrorétenteur lors des arrosages, la vitese de gonflement de l'hydrorétenteur étant proportionnelle à la surface des particules.

Selon un autre mode de réalisation, le sachet contenant

l'hydrorétenteur peut également être utilisé, afin de constituer une réserve d'eau, pour des plantations d'arbustes en pleine terre. Dans ce cas particulier, on utilise un sachet de dimensions plus importantes (par exemple 17 cm x 17 cm) contenant 10 grammes d'hydrorétenteur.

Le sac est déposé au fond du trou de plantation et recouvert de 5 à 10 cm de terre. On procède alors normalement à la plantation.

Des moyens faisant office de mèche de réhydratation, et assurant le maintien d'une aération entre les particules de gel, sont incorporés dans le sachet.

Lesdits moyens faisant office de mèche de réhydratation sont des matériaux fibreux naturels, synthétiques ou des particules minérales. Ces moyens faisant office de réhydrataion sont soit collés, soit mélangés aux hydrorétenteurs.

Les dessins ci-joints donnés à titre d'exemple indicatif et non limitatif permettront aisément de comprendre l'invention. Ils représentent un mode de réalisation préféré selon l'invention.

La figure 1 est une vue en coupe d'un pot et d'une plante avec du terreau mélangé à des produits hydrorétenteurs.

La figure 2 est une vue en coupe d'un pot et d'une plante avec un sac de produits hydrorétenteurs selon l'invention disposée sur un aérateur régulateur.

La figure 3 est une vue de dessus vue en perspective du sac ou sachet.

La figure 4 est une vue de dessus vue en perspective d'un sac double

La figure 5 est une vue en coupe d'un sac de produits hydrorétenteurs secs.

La figure 6 est une vue en coupe d'un sac de produits hydrorétenteurs gonflés au maximum par l'eau.

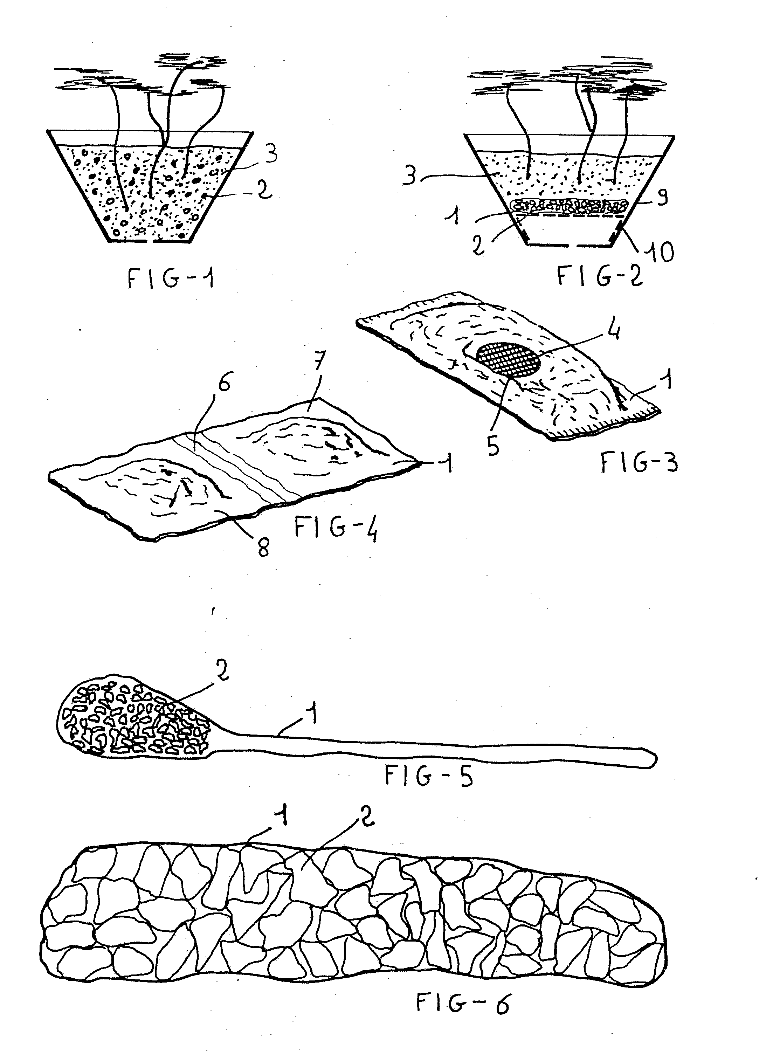

En regardant la figure 1, on imagine facilement que l'utilisateur hésite avant de dépoter ou de rempoter pour mélanger le terreau et les hydrorétenteurs.

Par contre, dans la figure 2, on comprend que le sac ou sachet 1 d'hydrorétenteurs 2 est très facile, propre à utiliser et rapide. L'utilisateur ne manipule qu'un sac ou sachet 1 et il n'a pas à faire de mélange avec le terreau 3. Il suffit de poser le sac 1 dans une bassine pendant au moins deux heures. Lorsque les produits hydrorétenteurs 2 sont gorgés d'eau, il suffit de poser le sac 1 au fond du pot 9 ou sur son aérateur régulateur 10.

Le sac 1 peut, par exemple, comporter, en son centre, un moyen de drainage 4 qui assure le passage de l'air et de l'eau. Ledit moyen de drainage 4 peut être une simple jointure 5 des deux parois du sac ou sachet 1. Ladite jointure 5 peut être circulaire, comme dans la figure 3, ou longitudinale 6, comme dans la figure 4; elle forme alors deux compartiments 7 et 8.

Le sac ou sachet 1 peut, de préférence, être en plastique perforé. Il peut, par exemple, avoir les dimensions suivantes : 10 x 10 centimètres, et contenir dans ce cas trois grammes de produits hydrorétenteurs secs.

L'hydrorétenteur 3 peut être par exemple un polyacrylamide réticulé.

Utilisation des produits hydrorétenteurs en sacs ou en sachets :

- mettre le sac ou sachet 1 en rétention dans 0,5 litre d'eau environ
- laisser gonfler pendant deux heures
- déposer le sac ou sachet ou coussin 1 ainsi obtenu au fond du pot 9 en prenant soin de ménager un drainage
- rempoter ensuite normalement

En ce qui concerne l'arrosage :

- procéder comme à l'habitude pendant les trois premières semaines, ce qui permet aux racines d'arriver en contact du produit.
- diminuer ensuite l'arrosage d'environ 30 %
- tous les trois ou quatre mois ou en cas d'absence prolongée, faire un bassinage pendant une heure.

L'invention tend à optimiser les propriétés des hydrorétenteurs. En effet, on a pu constater que ce mode d'utilisation procure une efficacité accrue de ces produits par rapport à l'état actuel de la technique.

Exemple 1 :

On réalise un rempotage de codiaeum variegatum selon trois modalités:

- 1) Témoin : rempotage dans tourbe blonde seule,
- 2) Hydrorétenteurs incorporés en mélange dans le terreau de rempotage à raison de 3 grammes/pot.
- 3) Rempotage dans la tourbe seule, avec un sac contenant trois grammes d'hydrorétenteur, selon l'invention, disposé au fond du pot, aprés gonflement pendant deux heures.

Après deux mois de culture, dix plants de chaque lot sont bassinés puis placés en arrêt d'irrigation pendant quinze jours. On note alors le pourcentage de plants desséchés et morts de chaque lot :

- 6 -

0165112

| | | Pourcentage de mortalité |
|---|---|---|
| 1 | | 75 % |
| 2 | | 20 % |
| 3 | | 0 % |

L'utilisation de l'hydrorétenteur, contenu dans un sachet disposé en fond de pot, après mise en rétention, procure donc une efficacité accrue de l'effet de réserve d'eau par rapport à l'utilisation du même hydrorétenteur en mélange dans le terreau.

Ce résultat trouve son explication dans l'expérience suivante :

— On dispose un sac de rétention au fond d'un pot qui est ensuite rempli avec un terreau horticole classique, puis arrosé. En l'absence d'arrosage ultérieur, on constate au bout de quinze jours à trois semaines que l'ensemble du terreau est déshydraté alors que le sac selon l'invention contenant les hydrorétenteurs est encore gorgé d'eau ; les témoins terreau seul et terreau + hydrorétentteur en mélange placés dans les mêmes conditions sont totalement secs.

Deux phénomènes expliquent ce résultat :

— le terreau s'est comporté comme un isolant qui a limité l'évaporation de l'hydrorétenteur contenu dans son sac.

— l'hydrorétenteur contenu dans son sac selon l'invention n'a quasiment pas rétrocédé son eau au terreau, contrairement à ce qui se produit avec l'hydrorétenteur intimement mélangé à l'ensemble du terreau.

En cours de végétation, la plante envoie ses racines au contact du sac contenant l'hydrorétenteur. Les racines pénètrent sans difficulté à travers le sac et vont alors pouvoir exploiter l'eau captive dans l'hydrorétenteur, sans perte aucune par évaporation tant à travers les parois du pot qu'à la surface du terreau.

Le sac selon l'invention est, destiné à limiter le risque d'obturation des orifices de drainage rencontré lors d'une utilisation des hydrorétenteurs en application localisée au fond du pot. Cette action est illustrée dans l'exemple ci-dessus :

Exemple 2 :

Des plants de fougère "Nephrolepis" sont rempotés selon deux modalités :

- 1) 3 grammes d'hydrorétenteur sont mis en gonflement dans l'eau. L'hydrogel obtenu est déposé au fond du container de rempotage puis recouvert d'un terreau de tourbe brune et du plant de Nephrolepis.

- 2) Un sac en non tissé contenant 3 grammes d'hydrorétenteur est mis en rétention puis déposé au fond du container. On réalise la plantation comme précédemment.

Les deux lots sont arrosés volontairment avec un excés d'eau.

Après trois mois de culture, on observe l'état des racines en fond de pot.

Dans le lot n° 1, 20 % des plants présentent des racines en voie de décomposition, une forte odeur caractéristique de conditions anaérobies se dégage du terreau. Le pot est gorgé d'eau et des masses d'hydrogel ont migré vers les orifices de drainage et les ont partillement obturés.

Dans le lot n° 2, le gel est resté emprisonné dans son sac en filet en non tissé, le container n'est pas en conditions anaérobies et le drainage s'effectue normalement.

Il est particulièrement intéressant d'utiliser les hydrorétenteurs enfermés dans des sacs perméables selon l'invention en combinaison avec certaines formes d'engrais à libération lente. En effet, outre que cette présentation facilite la manipulation et le dosage desdits engrais, on a pu constater un effet accru des fertilisants apportés dans le sac d'hydrorétenteur par rapport au même fertilisant apporté en mélange dans le terreau de rempotage, comme l'illustre l'exemple ci-dessous :

Exemple :

On réalise une plantation de jeunes plants de tomates selon les trois modalités suivantes :

- A : Terreau additionné de 1 gramme d'engrais-retard en granulés de 3 à 5 mm de diamètre connus sous la dénomination "Osmocote" (18 - 11 -10), 8/9 mois, en mélange.

- B : Des sachets perméables et contenant 3 grammes d'hydrorétenteur de type polyacrylamides réticulés additionnés de 1 gramme d'engrais-retard "Oscomote" sont mis en rétention dans l'eau pendant deux heures, puis placés au fond de pots de 1,5 litre et remplis de terreau.

- T : Terreau seul.

Les plants (10 de chaque lot) sont arrosés régulièrement, sans fertilisation.

Après un mois de culture, on compare le développement des trois lots:

| | | Poids frais moyen / plant |
|---|---|---|
| T | | 27,5 |
| A | | 32,5 |
| B | | 52 |

La présence d'un engrais à libération progressive, dans la présentation telle que définie dans la demande de brevet principale, permet par ailleurs d'obtenir une régulation du taux de gonflement de l'hydrorétenteur. On sait en effet que le gonflement des polyacrylamides dépend de la salinité des eaux utilisées ; cette salinité est très variable d'une région à l'autre. Dans le cas où l'eau utilisée se trouve être très pure, le gonflement de l'hydrorétenteur est important, entrainant une compaction des particules les unes sur les autres et exerçant une forte pression sur les parois du sac. La libération d'engrais qui intervient lors de la mise en rétention de la composition sac + hydrorétenteur + engrais-retard permet donc de tamponner la variabilité du taux de gonflement, évitant le risque d'asphyxie à l'intérieur du sac et le risque de craquement accidentel du sachet, comme l'illustre l'exemple ci-dessous :

Exemple :

- 3 grammes de polyacrylamides réticulés sont placés dans un sachet en non tissé avec ou sans engrais-retard, puis mis en rétention deux heures dans l'eau courante ou l'eau déminéralisée :

|  | Contrôle |
|---|---|
| 1) pas d'engrais, eau courante | bon |
| 2) pas d'engrais, eau déminé-ralisée | sac éclaté |
| 3) 1 gramme Osmocote, eau déminéralisée | bon |

Par ailleurs, il est plus particulièrement conseillé d'utiliser des formulations d'azote à libération progressive, telles que les dérivés de l'urée, qui ne provoquent pas d'effet d'excès de salinité et qui se trouvent piégés dans la maille de l'hydrogel ce qui accentue l'effet retard.

- 10 -

0165112

REVENDICATIONS

1. Hydrorétenteurs pour plantes caractérisés par le fait qu'ils sont enfermés dans des sacs ou sachets (1) perméables qui leur permettent de gonfler en absorbant l'eau par bassinage et de la restituer, au fur et à mesure des besoins de la plante après avoir été disposée au fond du pot, et ce, avec une manipulation, par l'utilisateur, propre et rapide.

2. Hydrorétenteurs pour plantes selon la revendication 1 caractérisés par le fait que l'emballage desdits hydrorétenteurs dans les sacs ou sachets (1), où ils sont libres, permet leur gonflage maximum d'où une efficacité maximum de leur capacité à retenir l'eau.

3. Hydrorétenteurs pour plantes selon l'une quelconque des revendications 1 ou 2 caractérisés par le fait que la structure du sac ou sachet (1) est telle qu'elle est perméable à l'eau et aux racines de la plante mais imperméable aux cristaux de produits (2) ; de plus, la structure du sac (1) peut permettre aux racines d'entrer dans le sac (1) et d'arriver en contact direct avec le produit hydrorétenteur (2).

4. Hydrorétenteurs pour plantes selon l'une quelconque des revendications 1, 2 ou 3 caractérisés par le fait que la composition du sac (1) peut être en produit tissé ou non tissé ; les trous du sac sont tels qu'ils ne laissent pas passer les grains de cristaux de produits hydrorétenteurs (2).

5. Hydrorétenteurs pour plantes selon l'une quelconque des revendications 1, 2, 3 ou 4 caractérisés par le fait que le sac ou sachet (1) peut comporter un ou plusieurs compartiments (7, 8).

6. Hydrorétenteurs pour plantes selon l'une quelconque des revendications 1, 2, 3, 4 ou 5 caractérisés par le fait que le sac (1) peut comporter, en son centre, un moyen de drainage (4) qui assure le passage de l'air et/ou de l'eau dans le pot ou la jardinière.

7. Hydrorétenteurs pour plantes selon l'une quelconque des revendications 1, 2, 3, 4, 5 ou 6 caractérisés par le fait que ledit moyen de drainage (4) peut être une simple jointure (5) des deux parois du sac ou sachet (1).

8. Hydrorétenteurs pour plantes selon l'une quelconque des revendications 1, 2, 3, 4, 5, 6 ou 7 caractérisés par le fait que ladite jointure (5) peut être circulaire.

9. Hydrorétenteurs pour plantes selon l'une quelconque des revendications 1, 2, 3, 4, 5, 6, 7 ou 8 caractérisés par le fait que ladite jointure peut être longitudinale (6) ; elle forme alors deux compartiments (7 et 8).

10. Hydrorétenteurs pour plantes selon l'une quelconque des revendications 1, 2, 3, 4, 5, 6, 7, 8 ou 9 caractérisés par le fait que le sac ou sachet (1) peut, de préférence, être en plastique perforé, il peut, par exemple, avoir les dimensions suivantes : 10 x 10 centimètres, et contenir dans ce cas trois grammes de produits hydrorétenteurs secs.

11. Procédé pour la mise en oeuvre des hydrorétenteurs en sacs ou sachets individuels selon l'une quelconque des revendications 1, 2, 3, 4, 5, 6, 7, 8, 9 ou 10 caractérisés par le fait que pour utiliser les produits hydrorétenteurs il faut :

- mettre le sac ou sachet (1) en rétention dans de l'eau

- laisser gonfler pendant deux heures

- déposer le sac ou sachet ou coussin (1) ainsi obtenu au fond du pot (9) en prenant soin de ménager un drainage

- rempoter ensuite normalement,

en ce qui concerne l'arrosage :

- procéder comme à l'habitude pendant les trois premières semaines, ce qui permet aux racines d'arriver en contact du produit

- diminuer ensuite l'arrosage d'environ 30 %

- tous les trois ou quatre mois ou en cas d'absence prolongée, faire un bassinage pendant une heure.

12. Sacs ou sachets pour contenir des hydrorétenteurs pour le stockage, la manupulation et l'utilisation caractérisés par le fait qu'ils sont perméables à l'eau et aux racines de la plante et imperméables aux cristaux desdits hydrorétenteurs.

13. Sacs ou sachets pour contenir des hydrorétenteurs pour le stockage, la manupulation et l'utilisation selon la revendication 12 caractérisés par le fait qu'ils comportent un moyen de drainage qui assure la passage de l'air et/ou de l'eau.

14. Sacs ou sachets pour contenir des hydrorétenteurs pour le stockage, la manupulation et l'utilisation selon l'une quelconque des revendications 12 ou 13 caractérisés par le fait qu'ils comportent un ou plusieurs compartiments (7,8) pour les produits hydrorétenteurs (2).

15. Sacs ou sachets pour contenir des hydrorétenteurs pour le stockage, la manupulation et l'utilisation selon l'une quelconque des revendications 12, 13 ou 14 caractérisés par le fait qu'ils sont constitués en matière tissée ou non tissée, les trous des parois laissent entrer dans les sacs (1) l'eau et les racines des plantes, mais empêchent de sortir les grains de cristaux de produits hydrorétenteurs (2).

16. Hydrorétenteurs pour plantes selon l'une quelconque des revendications 1, 2, 3, 4, 5, 6, 7, 8, 9 ou 10 caractérisés par le fait qu'ils sont constitués par un polyélectrolyte hydrocolloïdal insoluble dans l'eau et absorbant de 50 à 800 fois son poids d'eau, tel que les copolymères d'acide polyacrylique et de polyacrylamides.

- 12 -

0165112

17. Hydrorétenteurs pour plantes selon l'une quelconque des revendications 1, 2, 3, 4, 5, 6, 7, 8, 9, 10 ou 16 caractérisés par le fait que la granulométrie est comprise entre 1,5 et 3 mm.

18. Hydrorétenteurs selon l'une quelconque des revendications 1, 2, 3, 4, 5, 6, 7, 8, 9, 10, 16 ou 17 caractérisés par le fait que lesdits hydrorétenteurs sont utilisés en combinaison avec des moyens faisant office d'engrais ou de fertilisants à libération lente.

19. Hydrorétenteurs selon l'une quelconque des revndications 1, 2, 3, 4, 5, 6, 7, 8, 9, 10, 16, 17 ou 18 caractérisés par le fait que les engrais ou fertilisants à libération lente sont des formulations d'azote à libération progressive telles que les dérivées de l'urée.

20. Hydrorétenteurs selon l'une quelconque des revendications 1, 2, 3, 4, 5, 6, 7, 8, 9, 10, 16, 17, 18 ou 19 caractérisés par le fait qu'une fraction ionisée du fertilisant doit être libérée, cette fraction à libération rapide doit être de l'ordre de 1 à 10 % de l'engrais total incorporé dans le sac.

21. Sacs ou sachets pour contenir des hydrorétenteurs pour le stockage, la manutention, l'utilisation selon la revendication 12 caractérisés par le fait qu'ils présentent une porosité qui permet la pénétration des racines et évite le passage des particules d'hydrorétenteurs, ladite porosité est comprise entre 0,1 mm et 1,5 mm.

22. Sacs ou sachets pour contenir des hydrorétenteurs pour le stockage, la manutention, l'utilisation selon la revendication 12 ou 13 caractérisés par le fait que sont incorporés, dans lesdits sacs, des moyens faisant office de mèche de réhydratation et assurant le maintien d'une aération entre les particules de gel.

23. Sacs ou sachets pour contenir des hydrorétenteurs pour le stockage, la manutention, l'utilisation selon l'une quelconque des revndications 12, 13 ou 22 caractérisés par le fait que lesdits moyens faisant office de mèche de réhydratation sont des matériaux fibreux naturels synthétiques ou des particules minérales.

FIG-1

FIG-2

FIG-3

FIG-4

FIG-5

FIG-6

Office européen
des brevets

0165112
Numero de la demande

RAPPORT DE RECHERCHE EUROPEENNE

EP  85 40 0880

## DOCUMENTS CONSIDERES COMME PERTINENTS

| Catégorie | Citation du document avec indication en cas de besoin des parties pertinentes | Revendication concernee | CLASSEMENT DE LA DEMANDE (Int Cl 4) |
|---|---|---|---|
| X | FR-A-2 368 883 (RHONE-POULENC-TEXTILE) * Page 1, ligne 26 - page 2, ligne 33; page 4, lignes 1-19 * | 1,3,4, 12,15 | A 01 G  27/00 |
| A |  | 11 | |
| X | DE-A-2 849 044  (HOLTER) * Pages 4 et 5 * | 1,3,12 ,15 | |
| Y |  | 16,17, 18,19 | |
| Y | EP-A-0 072 213  (UNILEVER) * Page 4, ligne 13 - page 5, ligne 1; page 6, lignes 19-30; page 10, ligne 16 - page 11, ligne 13 * | 16,17 | |
| Y | EP-A-0 006 299  (FISONS) * Page 2, ligne 18 - page 3, ligne 15; page 4, ligne 22 - page 5, ligne 22 * | 18,19 | |
| A | US-A-3 418 813  (DILLON) * Colonne 2, lignes 40-54; colonne 3, lignes 20-26 * | 16 | |

DOMAINES TECHNIQUES
RECHERCHES (Int Cl 4)

A 01 G
C 09 K

Le present rapport de recherche a été etabli pour toutes les revendications

| Lieu de la recherche | Date d'achèvement de la recherche | Examinateur |
|---|---|---|
| LA HAYE | 28-08-1985 | HERYGERS J.J. |